# EUROPEAN PATENT APPLICATION

(11) **EP 1 111 557 A2**
(43) Date of publication of application: **27.06.2001**
(21) Application number: 00306741.0
(22) Date of filing: 08.08.2000
(51) Int. Cl.: G07F 7/10, G06K 19/07

(54) **Non-contact IC card and method of manufacturing the same**

(30) Priority: 10.12.1999 JP 35180699
(71) Applicant: FUJITSU LIMITED, Kawasaki-shi, Kanagawa 211-8588 (JP)
(72) Inventor: Suetake, Isao, c/o Fujitsu Limited, Kawasaki-shi, Kanagawa 211-8588 (JP)
(74) Representative: Hitching, Peter Matthew

(57) **Abstract**

A non-contact IC card (1) is provided in which applications are to be installed and which can selectively execute one of said applications by using data in a memory (6) in case of need. The memory (6) is divided into areas (7a to 7d) in accordance with the number of applications to be installed. Each of these divided area (7a to 7d) is used as an independent memory space for each application.

With such a non-contact IC card, even when several applications are to be installed in one non-contact IC card, each individual application provider need not disclose classified information unique to that provider to a conventional issuing maker. This helps to prevent a leak of an important classified item to any third party and thereby ensures greater security of data.

## Description

The present invention relates to non-contact IC cards and methods for manufacturing the same, more particularly, to multi-application non-contact IC cards in each of which applications are installed and an application to be used can be freely selected.

Recently, research and development of non-contact IC cards for use as a data carrier technology are being extensively carried out. For example, one application is being researched in which a commuter's train ticket is formed by a non-contact IC card. The user holds this IC card at a distance to a ticket examining machine for examining the IC card, the machine checks for the validity of the ticket, and, if the ticket is valid, the machine opens the gate.

In another application currently being researched, a credit card of a loan company or a cash card of a bank is formed by a non-contact IC card. The user holds this IC card at a distance to a reader/writer, and the reader/writer reads out and collates data (e.g. the credit limit or the balance of the account) in a memory embedded in the IC card or rewrites the data in the memory.

As described above, research and development of non-contact IC cards are being made in various fields such as commuter travel tickets, credit cards of a loan company, and cash cards of a bank.
However, users have many demands in using these non-contact IC cards, e.g. they do not want to carry many such cards. To meet this demand, a multi-application non-contact IC card having a number of functions is being researched in recent years. Such a non-contact IC card is disclosed in, e.g., Japanese Patent Application Laid-Open No. 11-154207.

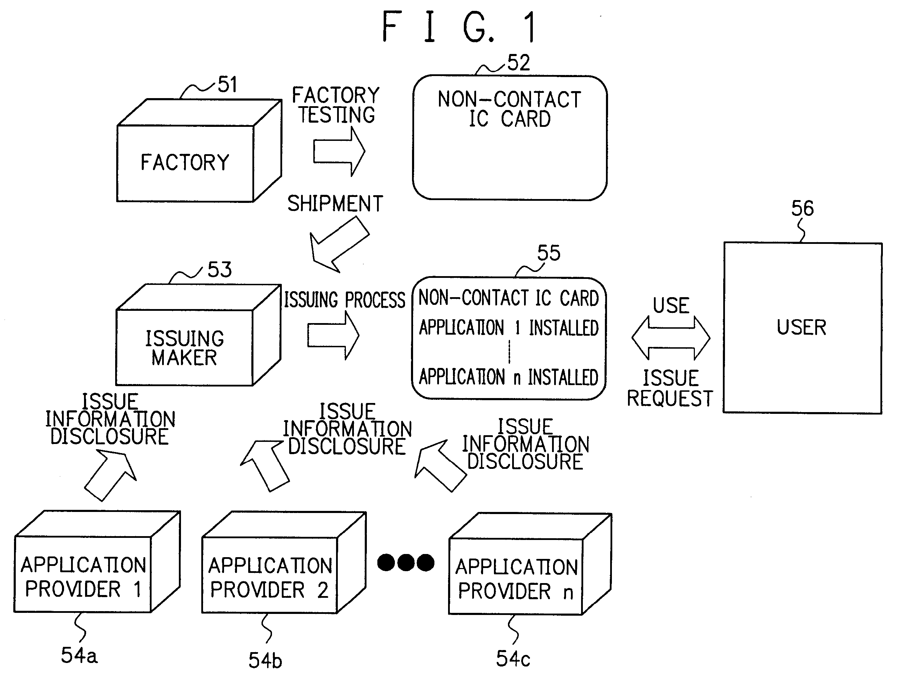

In general, a multi-application non-contact IC card is issued as shown in Fig. 1. That is, a non-contact IC card 52 manufactured as hardware in a manufacturing factory 51 is shipped to an issuing maker 53. This issuing maker 53 performs a unique issuing process in accordance with an application to be used. An "application" mentioned in this specification is a use of a non-contact IC card. For example, a bank application means the use of a card as a bank card, and a commuter ticket application means the use of a card as a commuter ticket.

In the conventional multi-application non-contact IC card issuing process as disclosed in the Japanese Patent Application Laid-Open No. 11-154207, a memory area is secured and initialized and an initial file is formed and set in advance during initial issue for an application expected to be used in future. That is, the capacity of a memory mounted in a non-contact IC card is restricted. To allow this limited memory capacity to be shared and effectively used by a number of applications, appropriate processing such as memory area allocation is performed.

In this issuing process, pieces of information necessary to install applications into one non-contact IC card are disclosed to the issuing maker 53 from application providers 54a to 54c. The issuing maker 53 examines and adjusts, e.g., the data size required to install each application. On the basis of the disclosed issue information, the issuing maker 53 performs the aforementioned issuing process in accordance with the specification of each application and forms a non-contact IC card 55 in which the applications are installed.

Then the non-contact IC card 55 formed-above is delivered to a user 56 and utilized by the user, if necessary, after a re-issuing process performed on application providers 54a to 54c.

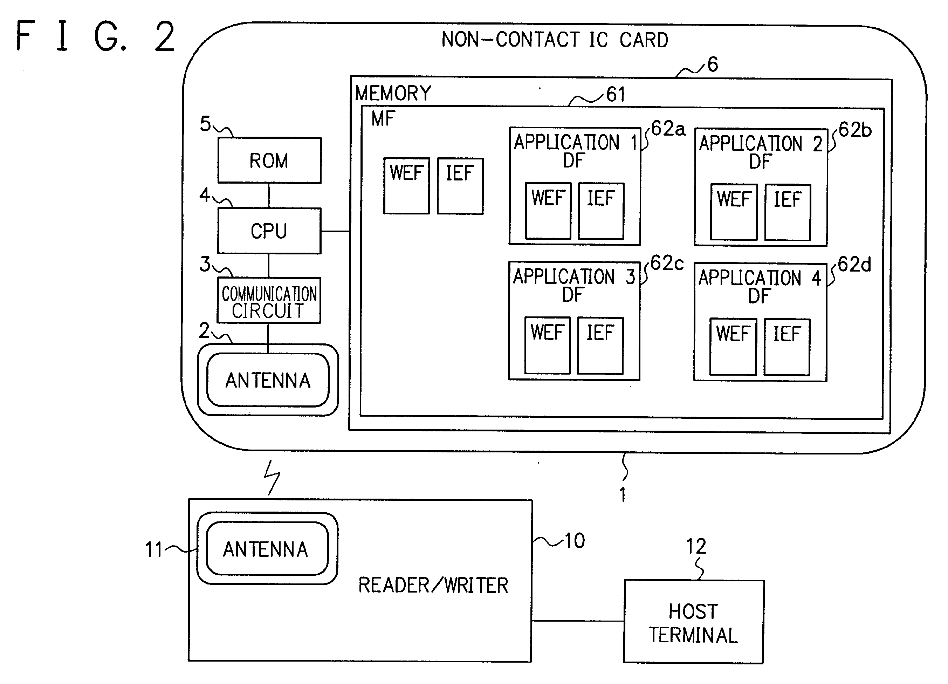

Fig. 2 is a block diagram showing an example of logic configuration of a multi-application non-contact IC card formed. As shown in Fig. 2, this non-contact IC card 1 includes an antenna 2, a communication circuit 3, a CPU 4, a ROM 5, and a memory 6. The antenna 2 exchanges power and signals with an internal antenna 11 of a reader/writer 10. A power supply circuit (not shown) is connected to this antenna 2 and internally generates a DC voltage by using a received signal.

The communication circuit 3 modulates a signal to be transmitted from the non-contact IC card 1 to the reader/writer 10 and demodulates a signal transmitted from the reader/writer 10 to the non-contact IC card 1. This communication circuit 3 also encodes a signal transmitted from the reader/writer 10 and received by the antenna 2. The CPU 4 operates in accordance with programs stored in the ROM 5, and, if necessary, it performs read and write operations to data in the memory 6, thereby executing various processes in accordance with the applications installed in the non-contact IC card 1.

In this example shown in Fig. 2, the memory 6 has an MF (Master File) common area 61 shared by applications and DF (Dedicated File) discrete areas 62a to 62d separately used by those applications in this common memory space. Each of the common area 61 and the discrete areas 62a to 62d stores, e.g., a data file (WEF: Working Elementary File) necessary to provide an application and an encryption key file (IEF: Internal Elementary File) necessary to access this data file.

In accordance with the programs stored in the ROM 5, the CPU 4 communicates with a host terminal 12 connected to the reader/writer 10 and accesses, if necessary, the discrete areas 62a to 62d of the memory 6 which the individual applications use. To use the first application, for example, the CPU 4 accesses the data file WEF and the encryption key file IEF in the discrete area 62a. To this end, information indicating which application is using which DR area, must be recorded in the host terminal 12 and the reader/writer 10.

As described above, to install applications in one non-contact IC card, each application provider must disclose information required to install an application to the issuing maker. For example, in the case of a non-contact IC card which uses a command adopting a file concept, the file ID or the ID of the DF must be disclosed to the issuing maker to avoid duplication between the applications. Also, to secure a memory area, it is necessary to disclose the configuration of a file and the specification of file access right to be used by each application.

That is, in the case of the non-contact IC card 1 having the memory 6 formed as shown in Fig. 2, the individual providers must disclose, to the issuing maker, various pieces of information recorded in the DF areas 62a to 62d which these providers use. In the case of the first application, for example, the application provider must disclose, to the issuing maker, pieces of information indicating the file configuration, the file ID, and the settings of the data file WEF and the encryption key file IEF of the DF area 62a which this application uses.

Unfortunately, these pieces of information to be disclosed to the issuing maker by each application provider often include classified information unique to the provider. In particular, not only the data contents but also the file structures of the data file WEF and the encryption key file IEF are in many instances highly classified.

In this conventional technique, however, such classified information which is originally not to be disclosed must be disclosed in the formation of a multi-application non-contact IC-card, so important information leaks to the issuing maker. Also, if this classified information further leaks from the issuing maker to a third party, this third party can invade the data file WEF by using the encryption key which the third party originally is not entitled to. This may result in illegal use of data such as surreptitious use or alteration of data.

It is accordingly desirable reliably to warrant the security of classified information on each application provider in the formation of a multi-application non-contact IC card.

According to an embodiment of one aspect of the present invention, there is provided a non-contact IC card having a memory which is divided into areas in accordance with the number of applications to be installed in the card, each area being used as an independent memory space for each application. When this non-contact IC card supports a command adopting a file concept, the memory may be divided into master file areas in accordance with the number of applications.

This allows each application provider individually to install an application in one of the divided areas, so no conventional issuing maker is necessary. Therefore, even when applications are to be installed in one non-contact IC card, each individual application provider need not disclose its unique classified information to any conventional issuing maker. Hence, an important classified item does not leak from the issuing maker to any third party, so breaches of security can be prevented.

According to an embodiment of another aspect of the present invention, as a method of selecting an application in a multi-application non-contact IC card, a collision preventing process is performed, when a non-contact IC card in which applications are installed, enters the communication range of a reader/writer, by regarding the applications as separate non-contact IC cards, thereby selecting an arbitrary application.

This permits each application in the non-contact IC card to be treated as an entirely independent application from the outside. Therefore, the conventional environment can be directly used, without ever changing a reader/writer and a host terminal as associated devices, as the environment of a multi-application non-contact IC card embodying the present invention.

In one embodiment of the present invention, in accordance with an application selected among applications, control is so performed that only a specific one of areas on a memory is accessed, which corresponds to the selected application.

When an arbitrary application is selected in a non-contact IC card, therefore, memory access is permitted only to a specific area corresponding to the selected application. Hence, even when applications are installed in one non-contact IC card, they can be individually processed as entirely independent applications. This inhibits access from any third party and prevents a leak of secrets.

Reference will now be made, by way of example, to the accompanying drawings, in which:
Fig. 1 is a representation of a procedure of issuing a previously-considered multi-application non-contact IC card;
Fig. 2 is a block diagram showing an example of logic configuration of a multi-application non-contact IC card formed;
Fig. 3 is a block diagram showing an example of logic configuration of a multi-application non-contact IC card formed by an embodiment of the present invention;
Fig. 4 is a representation of a procedure of issuing the multi-application non-contact IC card according to the embodiment;
Fig. 5 is a flow chart showing the flows of processing by a reader/writer or a host terminal and processing by the non-contact IC card in selecting an application;
Fig. 6 is a timing chart showing the practical operation of an application selection;
Fig. 7 is a diagrammatic view showing the construction of another multi-application non-contact IC card according to the embodiment; and
Fig. 8 is a diagrammatic view showing the construction of still another multi-application non-contact IC card according to the embodiment.

Hereinafter, an embodiment of the present invention will be described in detail with reference to drawings.

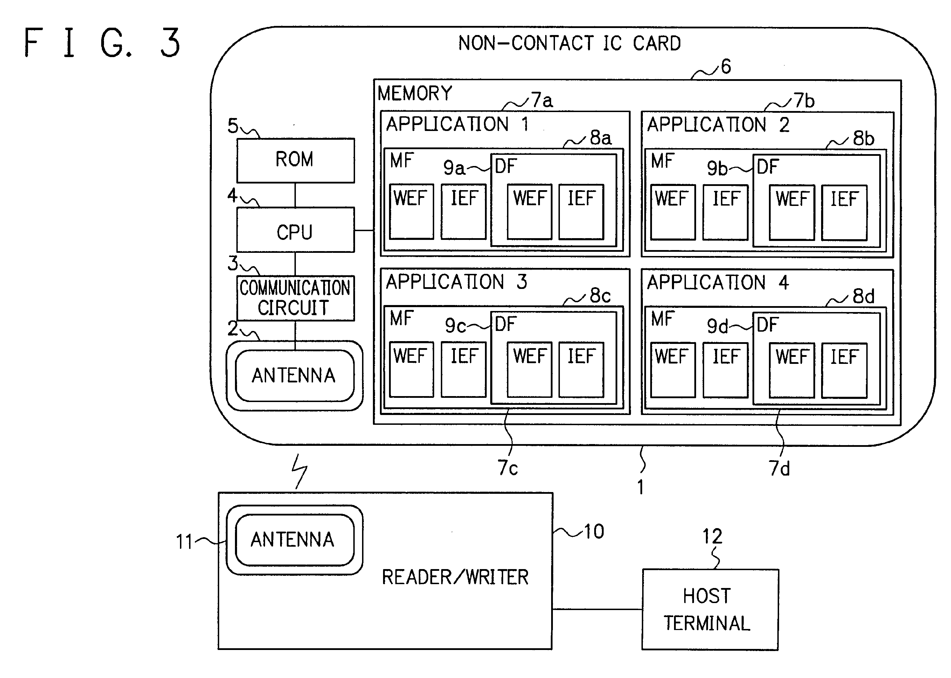

Fig. 3 is a block diagram showing an example of logic configuration of a multi-application non-contact IC card formed according to this embodiment.

As shown in Fig. 3, a non-contact IC card 1 of this embodiment includes an antenna 2, a communication circuit 3, a CPU 4, a ROM 5, and a memory 6. The antenna 2 exchanges power and signals with an internal antenna 11 of a reader/writer 10. A power supply circuit (not shown) is connected to this antenna 2 and internally generates a DC voltage by using a received signal.

The communication system between the non-contact IC card 1 and the reader/writer 10 can be any of a system using an electromagnetic field generated by a radio of a few hundred kHz to a few tens of MHz as a communication medium, a microwave system using a microwave of a few GHz as a communication medium, and an optical communication system using near infrared radiation as a communication medium. This embodiment is applicable to any of these systems.

The communication circuit 3 is connected to the antenna 2 to modulate a signal to be transmitted from the non-contact IC card 1 to the reader/writer 10 and demodulate a signal transmitted from the reader/writer 10 to the non-contact IC card 1. This communication circuit 3 also encodes a signal transmitted from the reader/writer 10 and received by the antenna 2.

The CPU 4 operates in accordance with programs stored in the ROM 5. This CPU 4 analyzes a signal encoded by the communication circuit 3 and executes various processes corresponding to applications installed in the non-contact IC card 1. The programs recorded in the ROM 5 are so described that data in the memory 6 connected to the CPU 4 is read out in case of need or the contents of data in the memory 6 are updated.

The memory 6 is divided into areas independent of each other in accordance with the number of applications to be installed. In the example shown in Fig. 3, this memory 6 is divided into four areas 7a to 7d, and four applications are installed in these four divided areas 7a to 7d. That is, first, second, third, and fourth applications are installed in the first, second, third, and fourth areas 7a, 7b, 7c, and 7d, respectively.

Examples of the first to fourth applications are a commutation (commuter) ticket application which is a railroad commutation ticket, a credit card application which is a credit card of a loan company, a cash card application which is a cash card of a bank, and a telephone card application which is a telephone card, all in the form of a non-contact IC card.

These applications herein enumerated are merely examples, so other applications can naturally be applied. For example, a pass of a toll road can be formed by a non-contact IC card as an application. The user holds this IC card at a distance to a reader/writer, and the reader/writer reads out data (e.g., the ID number of a credit card or a cash card) from a memory embedded in the IC card or writes the data of passage section and passage money in the memory.

Also, an electronic money card can be formed by a non-contact IC card as an application. The user holds this IC card at a distance to a reader/writer such as a POS register, and the reader/writer reads out data (e.g., the ID number of a credit card or a cash card) from a memory embedded in the IC card or updates the data of balance in the memory.

If the programs recorded in the ROM 5 support a command adopting a file concept, these divided areas 7a to 7d include master file areas (MF areas 8a to 8d). For example, the divided area 7a for installing the first application includes the MF area 8a which the first application independently uses. The divided area 7b for installing the second application includes the MF area 8b which the second application independently uses. Likewise, the divided areas 7c and 7d for installing the third and fourth applications include the independent MF areas 8c and 8d, respectively.

These independent MF areas 8a to 8d of the individual applications include DF areas 9a to 9d to be individually used by these applications. Each of the MR areas 8a to 8d and the DF areas 9a to 9d stores a data file WEF necessary to provide an application and an encryption key file IEF necessary to access this data file WEF. The provider of each application can freely install these data file WEF and encryption key file IEF within the limited range of each individual area.

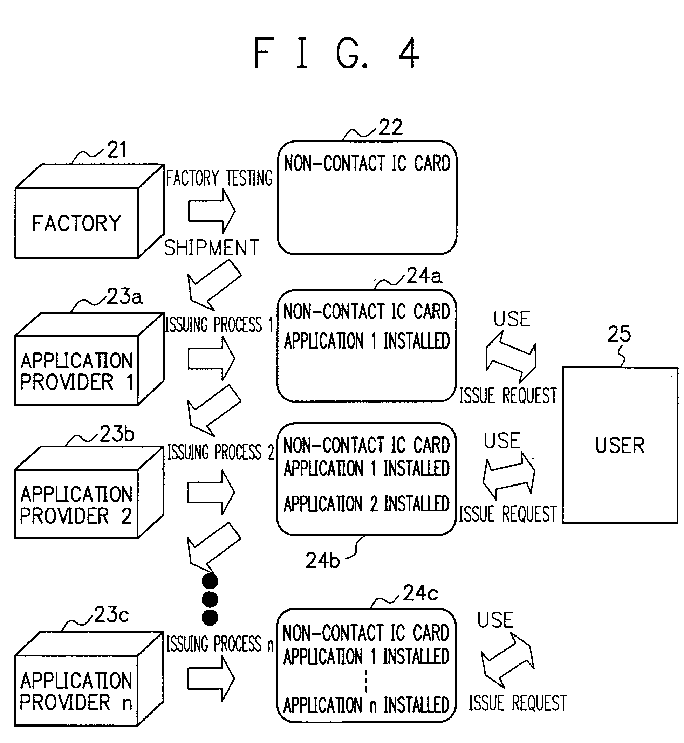

Fig. 4 is a representation of a procedure of issuing the multi-application non-contact IC card according to this embodiment. Referring to Fig. 4, a manufacturing factory 21 ships a non-contact IC card 22 manufactured and tested as hardware to a first application provider 23a. In this manufacturing factory 21, the types of applications to be installed in the non-contact IC card are not determined at all. That is, only the process of dividing the memory 6 into the areas 7a to 7d in accordance with the number of applications to be installed is performed.

The first application provider 23a which has received the non-contact IC card 22 in which only the area division is thus performed, performs a unique issuing process to install an original application in one of the divided areas 7a to 7d. As an example, the first application provider 23a installs the MF area 8a and the DF area 9a in the first divided area 7a and records the data file WEF and the encryption key file IEF in these areas, thereby installing the first application.

In this stage, in accordance with an issue request from a user 25 the first application provider 23a can provide a non-contact IC card 24a in which the first application is installed. Alternatively, further to install another application, the application provider 23a transfers the non-contact IC card 24a formed to a second application provider 23b.

The second application provider 23b which has received the non-contact IC card 24a in which the first application is thus installed performs a unique issuing process to install an original application in one of the divided areas 7a to 7d. As an example, the second application provider 23b installs the MF area 8b and the DF area 9b in the second divided area 7b and records the data file WEF and the encryption key file IEF in these areas, thereby installing the second application.

In this stage, in accordance with an issue request from the user 25 the second application provider 23b can provide a non-contact IC card 24b in which the first and second applications are installed. Alternatively, further to install another application, the second application provider 23b transfers the non-contact IC card 24b formed to still another application provider. In the same manner as the above, the providers of applications individually install these applications in the divided areas 7a to 7b prepared beforehand in the manufacturing factory 21.

In this embodiment as described above, the memory 6 mounted in one non-contact IC card 1 is divided into the areas 7a to 7d, and these areas 7a to 7d can be used as independent IC card application memory spaces. This allows individual application providers independently to perform issuing processes necessary to form a multi-application non-contact IC card. Hence, no classified information need be disclosed to any third party. This can prevent a leak of secret and easily insures data security.

When the first to fourth applications are installed in one non-contact IC card 1 as described above, a means for externally selecting an application to be used is necessary. For example, control must be so performed that the first application installed in the first divided area 7a is selected whenever the non-contact IC card 1 is to be used by a reader/writer 10 for the first application, and that the second application installed in the second divided area 7b is selected whenever the non-contact IC card 1 is to be used by a reader/writer 10 for the second application.

In this embodiment, a collision preventing function of the non-contact IC card 1 is used as this application selecting means. The collision preventing function is originally a function of selecting a non-contact IC card as an object of communication when non-contact IC cards enter the communication range of the reader/writer 10. In this embodiment, this collision preventing function is used inside one multi-application non-contact IC card 1 to select an arbitrary application in this multi-application non-contact IC card 1, thereby enabling communication.

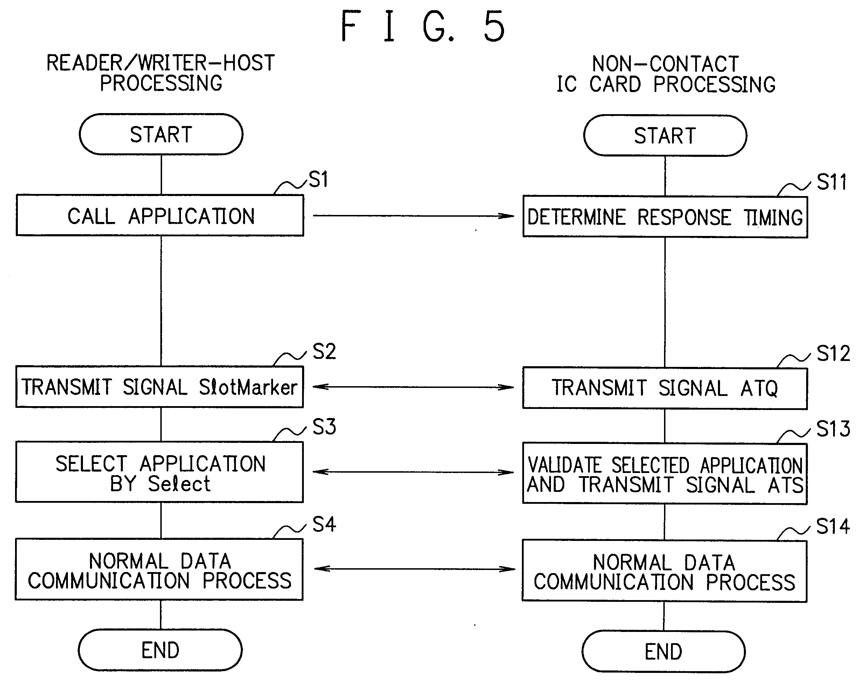

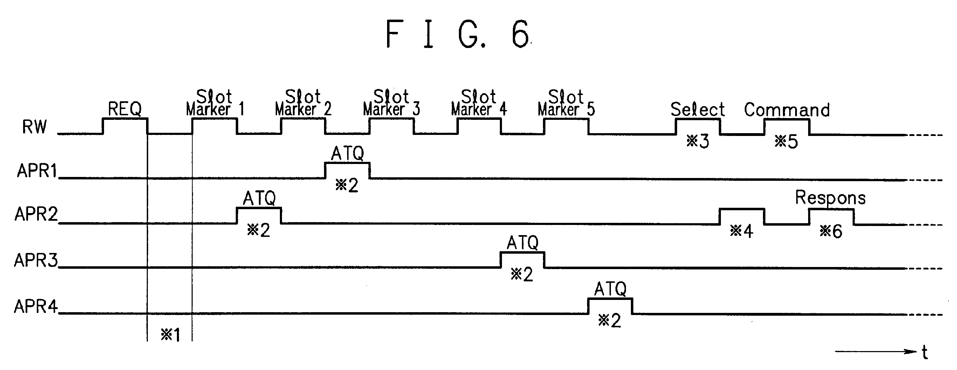

Figs. 5 and 6 show an example of collision preventing function used to select an application. Fig. 5 is a flow chart showing the flows of processing by the reader/writer 10 or the host terminal 12 (to be simply abbreviated as the reader/writer 10 hereinafter) and processing by the non-contact IC card 1 when an application is to be selected. Fig. 6 is a timing chart showing a practical operation of this application selection. The operation of application selection will be described below with reference to Figs. 5 and 6. However, it is naturally possible to select an application by using a collision preventing function other than that of this example.

Referring to Fig. 5, when the non-contact IC card 1 enters the communication range of the reader/writer 10, in step S1 the reader/writer 10 calls an application of the non-contact IC card 1. In this example, the reader/writer 10 transmits a request signal REQ shown in Fig. 6 to the non-contact IC card 1.

More specifically, the reader/writer 10 predicts the number of applications installed in the non-contact IC card 1 and transmits the predicted number of slots on the request signal REQ. After transmitting this request signal REQ, the reader/writer 10 transmits slot signals SlotMarker equal in number to the predicted slots. In the example shown in Fig. 6, the reader/writer 10 predicts that five applications are installed in the non-contact IC card 1, and transmits the predicted number of slot signals SlotMarker 1 to 5.

In the non-contact IC card 1 which has received this request signal REQ, in step S11, which timing of the five slot signals SlotMarker 1 to 5 is to be used to respond to the reader/writer 10, is determined by a random number for each application installed in this non-contact IC card 1 ( 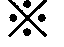 1 in Fig. 6). That is, in accordance with the programs recorded in the ROM 5, the CPU 4 determines the response timings of the applications with no overlapping part between them by controlling the random numbers generated by these applications such that they do not duplicate each other.

In the example shown in Fig. 6, the timings are determined such that the first, second, third, and fourth applications respond to the second, first, fourth, and fifth slot signals SlotMarker 2, 1, 4, and 5, respectively.

When the response timings of these applications are thus determined, in step S2, the reader/writer 10 sequentially transmits the five slot signals SlotMarker 1 to 5 at predetermined intervals. In step S12, each application in the non-contact IC card 1 transmits a response signal ATQ to the slot signal SlotMarker transmitted at the timing determined in step S11 ( 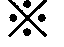 2 in Fig. 6). This response signal ATQ contains an ID number which differs from one non-contact IC card to another and from one application in a non-contact IC card to another, and which is uniquely identifiable. This response signal ATQ can also contain identification information indicating the type of that application and other additional information.

In receiving the response signal ATQ from each application, in step S3, the reader/writer 10 selects one of the applications in the non-contact IC card 1 and transmits a selection signal Select to the non-contact IC card 1 ( 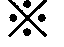 3 in Fig. 6). In this example, the uniquely identifiable ID number contained in the response signal ATQ is contained in the selection signal Select, thereby selecting an application corresponding to the reader/writer 10. In the example shown in Fig. 6, the reader/writer 10 for a credit card is used, so the second application which provides a credit card application is chosen.

In the non-contact IC card 1 which has received this selection signal Select, in step S13, the CPU 4 operates in accordance with the programs recorded in the ROM 5 to validate (activate) only the second application selected in step S3 and control the other applications not to be used in the subsequent processing. The programs in the ROM 5 permit subsequent access only to the second divided area 7b corresponding to the second application and inhibit access to the other areas. Also, the non-contact IC card 1 informs the reader/writer 10 that the second application is validated, by transmitting a selection response signal ATS to the reader/writer 10 ( 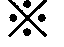 4 in Fig. 6).

When one application is thus selected, the reader/writer 10 and the non-contact IC card 1 perform normal data communication processes in steps S4 and S14, respectively. That is, the reader/writer 10 transmits a command such as a read command or a write command to the non-contact IC card 1 ( 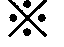 5 in Fig. 6). In response to this command, the non-contact IC card 1 accesses the data file WEF and the encryption key file IEF in the second divided area 7b and returns a response Respons to the reader/writer 10 ( 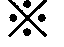 6 in Fig. 6).

In this embodiment as described above, the collision preventing function is used as a method of selecting an application installed in one multi-application non-contact IC card 1. The CPU 4 performs the collision preventing process in accordance with the programs recorded in the ROM 5 to select an arbitrary one of the applications described above. Also, the CPU 4 permits access only to a specific area, corresponding to the selected application, of the divided areas 7a to 7d on the memory 6. That is, the CPU 4 and the ROM 5 form a selector and an access controller in an embodiment of the present invention.

With this configuration, even when applications are installed in one non-contact IC card 1, they can be processed as entirely independent applications, i.e., these individual applications in the non-contact IC card 1 can be treated as entirely independent applications from the outside. Accordingly, the conventional environment can be directly used as the environment of the multi-application non-contact IC card 1 of this embodiment, without ever changing the reader/writer 10 and the host terminal 12 as associated devices.

Even when the multi-application non-contact IC card 1 of this embodiment and conventional non-contact IC cards enter the communication range of the reader/writer 10 at the same time, it is possible by a similar collision preventing process to select one non-contact IC card or one application in the multi-application non-contact IC card. This facilitates the formation of the multi-application non-contact IC card 1 in which applications are installed, so a user need not carry many cards.

In the explanation of Fig. 6, each application in the non-contact IC card 1 adds identification information representing the type of application to the response signal ATQ to be transmitted to the reader/writer 10 ( 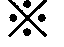 2). On the basis of this identification information, the reader/writer 10 can select a specific application ( 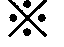 3). However, it is also possible to add identification information representing the type of application to the request signal REQ initially transmitted by the reader/writer 10 and allow one specific application corresponding to this identification information to return the response signal ATQ.

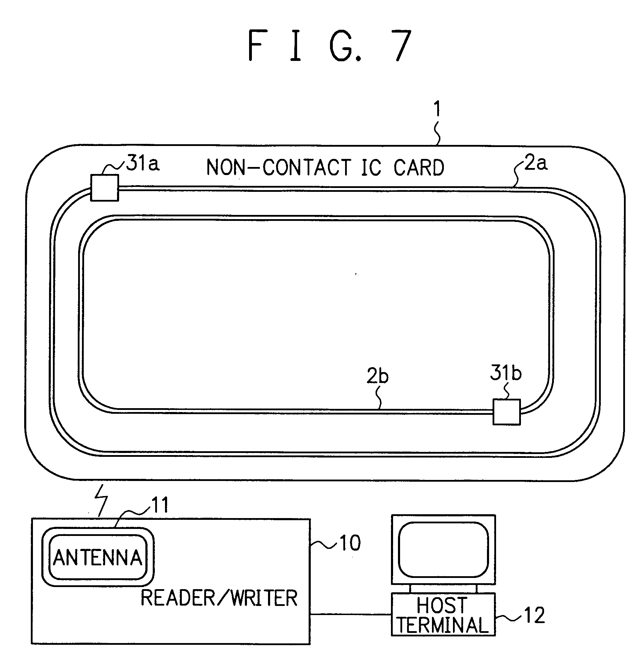

Fig. 7 is a diagrammatic view showing the construction of another multi-application non-contact IC card 1 according to this embodiment.

As shown in Fig. 7, the multi-application non-contact IC card 1 of this embodiment includes two antennas 2a and 2b and two chips 31a and 31b connected to these antennas 2a and 2b. Two applications are installed in the two chips 31a and 31b.

Each of the two antennas 2a and 2b correspond to the antenna 2 shown in Fig. 3. Each of the two chips 31a and 31b includes the communication circuit 3, the CPU 4, the ROM 5, and the memory 6 as shown in Fig. 3. However, the memory 6 is not divided in one chip, i.e., one application is installed in the whole memory 6. For example, the memory 6 in the first chip 31a holds only information in the area 7a shown in Fig. 3. Likewise, the memory 6 in the second chip 31b holds only information in the area 7b shown in Fig. 3.

In the construction shown in Fig. 7, the communication circuit 3, the CPU 4, the ROM 5, and the memory 6 are formed by one chip, and the area in the memory 6 is divided in accordance with the number of applications. Unlike this construction shown in Fig. 3, the construction shown in Fig. 7 includes chips each having the communication circuit 3, the CPU 4, the ROM 5, and the memory 6. In this manner, memories 6 equal in number to applications can be separately provided by chips.

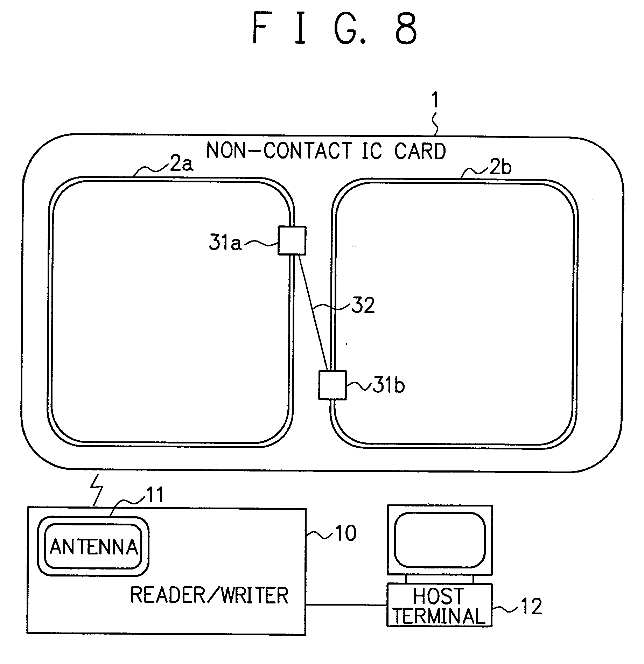

Fig. 8 is a diagrammatic view showing the construction of still another multi-application non-contact IC card 1 according to this embodiment.

In the construction shown in Fig. 7, the two circuits composed of the pairs of the antennas 2a and 2b and the chips 31a and 31b are concentrically arranged. As shown in Fig. 8, however, these two circuits can also be juxtaposed to each other.

Furthermore, it is also possible to form the first and second chips 31a and 31b so as to provide the same application and use one circuit as a backup of the other by connecting them by a line 32. In this case, the first chip 31a operates in normal state and, if some problem occurs, the same application is kept provided by switching to the second chip 31b.

When the two circuits are connected by the line 32 to use one as a backup of the other as shown in Fig. 8, pairs of identical circuit configurations can be prepared and used as circuits for providing different applications. When this is the case, one non-contact IC card 1 can be used as a multi-application non-contact IC card as described previously.

Each embodiment described above merely indicates a practical example in practicing the present invention, so the technical scope of the invention should not be limitedly interpreted by these embodiments. That is, the present invention can be practiced in various forms without departing from the spirit and the principal characteristic features of the invention.

## Claims

1. A non-contact IC card in which applications are installable and which is operable when in use to selectively execute one of such installed applications by using data in a memory in case of need, wherein
said memory is divided into areas in accordance with the number of applications to be installed, and each area is used as an independent memory space for each of said applications.

2. A card according to claim 1, wherein said non-contact IC card supports a command adopting a file concept, and said memory is divided into master file areas in accordance with said number of applications to be installed.

3. A non-contact IC card in which applications are installable and which is operable when in use to selectively execute one of such installed applications by using data in a memory in case of need, said card comprising:
a memory divided into areas in accordance with the number of applications to be installed; and
a selector for performing a collision preventing process, when said non-contact IC card, in which such applications are installed in said areas, enters a communication range of a reader/writer, by regarding said applications as separate non-contact IC cards, thereby selecting an arbitrary one of said applications.

4. A card according to claim 3, wherein said non-contact IC card supports a command adopting a file concept, and said memory is divided into master file areas in accordance with the number of applications to be installed.

5. A card according to claim 3, further comprising an access controller for performing control, in accordance with an application selected among said applications, such that access is performed only to a specific one of said areas on said memory, which corresponds to the selected application.

6. A method of manufacturing a non-contact IC card in which applications are installable and which is operable when in use to selectively execute one of such installed applications by using data in a memory in case of need, said method comprising the steps of:
dividing said memory into areas in accordance with the number of applications to be installed; and
allowing the providers of such applications to install their own applications in said areas on said memory.

7. A method according to claim 6, wherein, when a non-contact IC card which supports a command adopting a file concept is to be formed, said memory is divided into master file areas in accordance with the number of applications to be installed.

8. A non-contact IC card in which applications are installed and which can selectively execute one of said applications by using data in a memory in case of need, wherein said memory is divided into areas in accordance with the number of applications to be installed, and each area is used as an independent memory space for each of said applications.

9. A non-contact IC card in which applications are installed and which can selectively execute one of said applications by using data in a memory in case of need, said card comprising:
a memory divided into areas in accordance with the number of applications to be installed; and
a selector for performing a collision preventing process, when said non-contact IC card in which applications are installed in said areas, enters a communication range of a reader/writer, by regarding said applications as separate non-contact IC cards, thereby selecting an arbitrary one of said applications.

10. A method of manufacturing a non-contact IC card in which applications are installed and which can selectively execute one of said applications by using data in a memory in case of need, said method comprising the steps of:
dividing said memory into areas in accordance with the number of applications to be installed; and
allowing the providers of said applications to install their own applications in said areas on said memory.
